# EUROPEAN PATENT APPLICATION

(11) **EP 4 534 196 A1**
(43) Date of publication of application: **09.04.2025**
(21) Application number: 23202276.4
(22) Date of filing: 06.10.2023
(51) Int. Cl.: B01J 13/18, C08F 222/10, C08J 9/20, C08J 9/22

(54) **BIODEGRADABLE CORE-SHELL MICROSPHERES**

(71) Applicant: Nouryon Chemicals International B.V., 1101 BZ Amsterdam (NL)
(72) Inventor: The designation of the inventor has not yet been filed
(74) Representative: LKGlobal UK Ltd.

(57) **Abstract**

The present invention relates to relates to core-shell microspheres comprising a thermoplastic polymer shell encapsulating a hollow core comprising a core-forming agent which can be a gas or liquid, wherein the thermoplastic polymer shell comprises a copolymer made of at least one cyclic ketene acetal and at least one ethylenically unsaturated comonomer different to the at least one cyclic ketene acetal and to a process of their manufacture. The invention further provides expanded microspheres prepared from thermally expandable core-shell microspheres.

## Description

### Technical Field

The present invention relates to core-shell microspheres comprising a thermoplastic polymer shell encapsulating a hollow core comprising a core-forming agent which can be a gas or liquid, wherein the thermoplastic polymer shell comprises a copolymer made of at least one cyclic ketene acetal and at least one ethylenically unsaturated comonomer different to the at least one cyclic ketene acetal and to a process of their manufacture. The invention further provides expanded microspheres prepared from thermally expandable core-shell microspheres.

### Background Art

Microspheres which comprise a thermoplastic polymer shell surrounding a hollow core are known in the art. In such microspheres the hollow core comprises a core-forming agent which may be a liquid or a gas. For instance, expandable core-shell microspheres wherein the core comprises a blowing agent are disclosed in, for example, US 3,615,972 and WO 2007/091960. Thermally expandable core-shell microspheres comprise a shell of a thermoplastic resin and a (usually liquid) blowing agent (propellant) encapsulated therein. Upon heating the thermoplastic shell softens and simultaneously the blowing agent volatilizes while being retained within the thermoplastic shell, which in turn causes an expansion of the thermally expandable thermoplastic microspheres to form expanded microspheres. Expandable microspheres are marketed in various forms, e.g. as dry free-flowing particles, as aqueous slurry or as a partially dewatered wet cake.

Core-shell microspheres can be produced by polymerizing ethylenically unsaturated monomers in the presence of a core forming agent, for instance a blowing agent in case of expandable core-shell microspheres. Conventional monomers used to form the polymer for the thermoplastic shell are a mixture of vinyl containing monomers, such as, vinylidene chloride, acrylonitrile, methyl methacrylate, methyl acrylate, methacrylonitrile and methacrylic acid in various combinations. Conventional monomers are generally produced from petrochemicals which originate from fossil fuels and are widely used because they are easily accessible for a cheap price. In addition, for the production of expandable core-shell microspheres conventional monomers have the advantage that they impart thermoplastic properties to the thermoplastic shell ensuring that the thermally expandable core-shell microspheres expand satisfactorily when heated to form the expanded microspheres whilst retaining the blowing agent therein.

However, core-shell microspheres produced from conventional monomers may have the disadvantage of reduced biodegradability contributing to the general problem of microplastics which are released into the environment. This restricts the use of such core-shell microspheres in particular in applications, wherein the core-shell microspheres are not immobilized in a matrix and wherein there is a high probability of release into the environment, such as in aqueous solutions as for instance in cosmetics. Moreover, it has also become of interest that even core-shell microspheres immobilized in a matrix, such as a surrounding cured polymer matrix, should desirably be biodegradable in case such microspheres are released into the environment for any reason, for instance due to a rupture of the matrix material.

It would hence be desirable to provide core-shell microspheres, in particular expandable core-shell microspheres, which are at least to a certain extend biodegradable and which, at the same time, have similar properties as core-shell microspheres which are produced from conventional monomers derived from fossil fuels. Moreover, it would be desirable if such core-shell microspheres have a nice spherical shape and a smooth surface which indicates their suitability for use in various applications.

### Summary of the invention

It has surprisingly been found that the above requirements are met when the polymer shell is partially produced from at least one cyclic ketene acetal as a comonomer, and that it is possible to obtain core-shell microspheres, and in particular thermally expandable core-shell particles with good expansion properties from the copolymers of these cyclic ketene acetals.

Accordingly, the present invention provides, in a first aspect, core-shell microspheres comprising a thermoplastic polymer shell encapsulating a hollow core comprising a core-forming agent which can be a gas or liquid, wherein the thermoplastic polymer shell comprises a copolymer made of at least one cyclic ketene acetal and at least one ethylenically unsaturated comonomer different to the at least one cyclic ketene acetal.

In a further, second, aspect, the present invention relates to a process for the manufacture of the core-shell microspheres according to the first aspect of the present invention, comprising aqueous suspension polymerization of ethylenically unsaturated monomer(s) using a free-radical initiator in the presence of a core-forming agent, wherein at least one ethylenically unsaturated monomer is a cyclic ketene acetal.

In a further, third aspect, the present invention relates a process for preparing expanded microspheres comprising heating the core-shell microspheres of the first aspect of the present invention which are further thermally expandable so that they expand.

In a further, fourth aspect, the present invention relates to expanded core-shell microspheres obtained by thermal expansion of the microspheres according to the first aspect of the present invention which are further thermally expandable.

### Brief Description of Drawings

Figures 1A and 1B are illustrations depicting single core and multiple core microspheres.
Figures 2A and 2B are microscope pictures of core-shell microspheres made without a cyclic ketone monomer (Figure 2A) and made with a cyclic ketone monomer (Figure 2B).

### Description of Embodiments

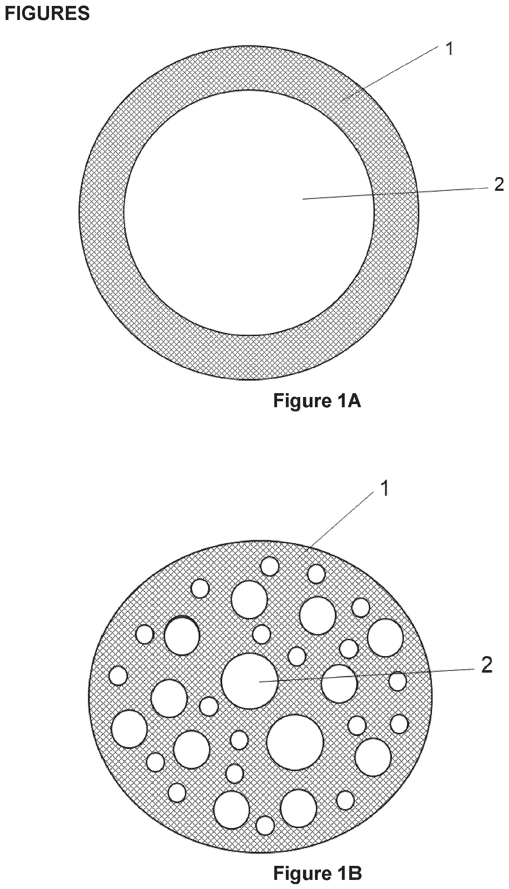

The core-shell microspheres according to the first aspect of the present invention comprise a thermoplastic polymer shell and a hollow core comprising a core-forming agent. Figure 1A shows such a core-shell microsphere with a thermoplastic polymer shell (1) and a hollow core (2) which can also be called a cavity.

The thermoplastic polymer shell of the microspheres according to the invention comprises a copolymer made of at least one cyclic ketene acetal and at least one ethylenically unsaturated comonomer different to the at least one cyclic ketene acetal.

It has surprisingly been found that the presence of polymer units derived from cyclic ketene acetals improve the biodegradability of the resulting copolymer. Without being wished to be bound by theory, it is believed that the polymer units derived from cyclic ketene acetals which lead to ester functionalities in the polymer backbone enable microorganism to more efficiently cleave the polymer backbone chain using for instance naturally occurring enzymes. It has further surprisingly been found that the shell polymer of core-shell microspheres can be prepared by using *inter alia* polymer units derived from cyclic ketene acetals and that the such obtained core-shell microspheres are stable and suitable to retain a core-forming agent within the polymer shell. Moreover, it has surprisingly been found that also expandable core-shell microspheres the polymer shell of which contains polymer units derived from cyclic ketene acetals can be obtained. Such obtained expandable core-shell microspheres surprisingly retain the blowing agent therein and can be expanded to produce expanded core-shell microspheres which are biodegradable and which, at the same time, have acceptable physical properties (such as expansion start temperature (T_{Start}), density, and stability, just to name a few of them) compared to expanded core-shell microspheres the polymer shell of which has been made from conventional monomers. It has further surprisingly been found that the polymer units derived from cyclic ketene acetals do not compromise the thermoplastic properties of the thermoplastic shell ensuring that, in case the inventive core-shell microspheres are thermally expandable core-shell microspheres, the core-shell microspheres may expand satisfactorily when heated to form expanded microspheres.

In preferred embodiments, the cyclic ketene acetal has the formula (1): 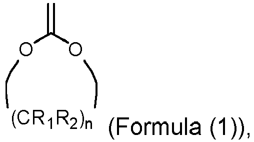 wherein each R₁ and R₂ is independently hydrogen or a group selected from alkyl or aryl which may be further substituted, and n is an integer from 2 to 10.

In some embodiments, the alkyl and/or aryl groups may be further substituted for instance with a group selected from hydroxy, carboxy, alkoxy amide, ester, halogen, or deuterium.

In some embodiments, the alkyl and/or aryl groups are not further substituted.

In some embodiments, n is preferably an integer from 2 to 8, more preferably an integer from 2 to 6, and even more preferably an integer from 2 to 4, such as 2, 3 or 4. Particularly preferred is that n is 4.

In some embodiments, one R₁ and one R₂ may be joined to form a (secondary) ring which is fused to the (primary) acetal-containing ring of the cyclic ketene acetal.

In some further preferred embodiments, each R₁ is hydrogen and each R₂ is independently hydrogen or a group selected from alkyl or aryl which may be further substituted. In another preferred embodiments, each R₁ is hydrogen and all R₂ except of one are hydrogen, i.e. only one R₂ is a group selected from alkyl or aryl which may be further substituted whereas all other R₂ are hydrogen.

In a particularly preferred embodiment, all R₁ and R₂ are hydrogen.

In some embodiments, the cyclic ketene acetal may be selected from the following group of compounds CKA1-CKA36:

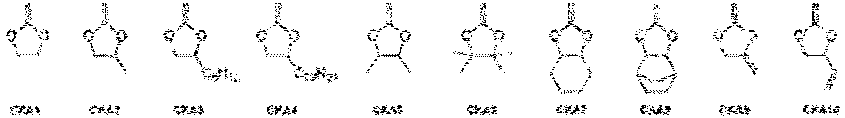

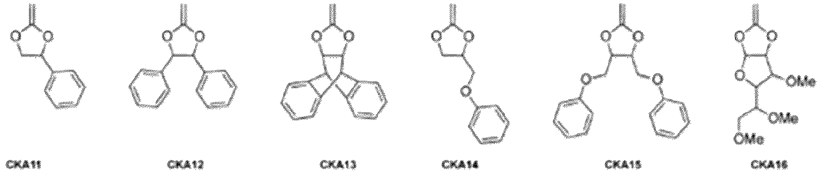

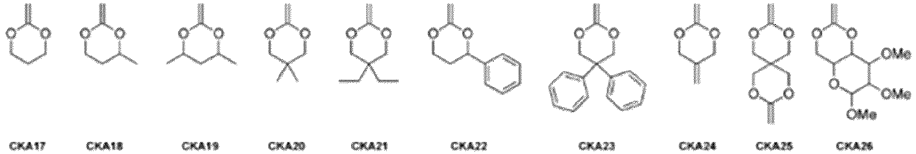

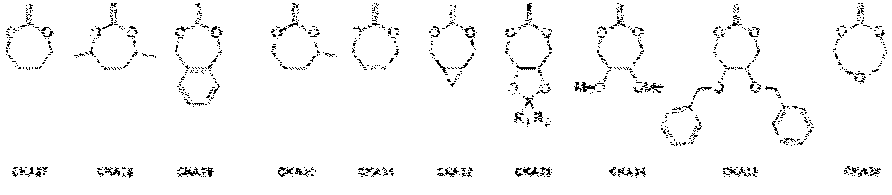

In some particular preferred embodiments, the cyclic ketene acetal is selected from 2-methylene-1,3-dioxepane (MDO; CKA27), 2-methylene-4-methyl-1,3-dioxepane (Me-MDO; CKA30), and 5,6-benzyl-2-methylene-1,3-dioxepane (BMDO; CKA29)

The thermoplastic polymer for the shell is a copolymer of the cyclic ketene acetal with one or more ethylenically unsaturated monomers. Preferably, the ethylenically unsaturated comonomers are mono-unsaturated. Suitable mono-unsaturated comonomers are for example (meth)acrylates; vinyl esters; styrenes such as styrene and α-methylstyrene; nitrile-containing monomers; (meth)acrylamides; vinylidene halides, vinyl chloride, vinyl bromide and other halogenated vinyl compounds; vinyl ethers such as methyl vinyl ether, ethyl vinyl ether; N-substituted maleimides; dienes such as butadiene, isoprene and others; vinyl pyridine; itaconate dialkylester monomers, lactone monomers, and any combination thereof.

Preferred comonomers are selected from the list consisting of (meth)acrylonitrile, methyl methacrylate, vinylidene chloride, methyl acrylate, vinyl acetate, (meth)acrylic acid, (meth)acrylamide or any combination thereof. Particularly preferred comonomers are selected from acrylonitrile and vinyl acetate.

By "(meth)acrylate monomers" it is meant a compound and isomers thereof according to the general formula: 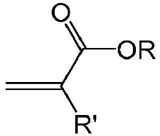 wherein R can be selected from the group consisting of hydrogen and an alkyl containing from 1 to 12 carbon atoms and R' can be selected from the group consisting of hydrogen and methyl. Examples of (meth)acrylate monomers are acrylic acid and salts thereof, methacrylic acid and salts thereof, acrylic anhydride, methacrylic anhydride, methyl acrylate, methyl methacrylate, ethyl acrylate, propyl acrylate, butyl acrylate, butyl methacrylate, propyl methacrylate, lauryl acrylate, 2-ethylhexylacrylate, ethyl methacrylate, isobornyl methacrylate, hydroxyethyl (meth)acrylate, hydroxypropyl (meth)acrylate, polyethylene glycol (meth)acrylate, tetrahydrofurfuryl methacrylate, and tetrahydrofurfuryl acrylate . Preferred (meth)acrylate monomers include methyl acrylate, methyl methacrylate and methacrylic acid.

By vinyl ester monomers it is meant a compound and isomers thereof according to the general formula: 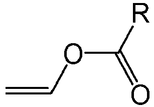 wherein R can be selected from an alkyl containing from 1 to 17 carbon atoms. Preferred vinyl ester monomers are vinyl acetate, vinyl butyrate, vinyl stearate, vinyl laurate, vinyl myristate and vinyl propionate.

By nitrile containing monomers it is meant a compound and isomers thereof according to the general formula: 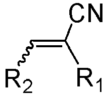 wherein R₁ and R₂ can be selected, separately from each other, from the group consisting of hydrogen and an alkyl containing from 1 to 17 carbon atoms, or a nitrile group.

Examples of nitrile containing monomers are acrylonitrile (R₁ = R₂ = H), methacrylonitrile (R₁ = CH₃, R₂ = H), fumaronitrile (R₁ = CH₃, R₂ = CN), crotonitrile (R₁ = CH₃, R₂ = CH₃). Preferred nitrile containing monomers are acrylonitrile and methacrylonitrile.

By (meth)acrylamide monomers it is meant a compound and isomers thereof according to the general formula: 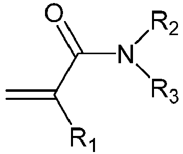 wherein R₁, R₂ and R₃ can be selected, separately from each other, from the group consisting of hydrogen and an alkyl containing from 1 to 17 carbon atoms or hydroxyalkyl. Preferred (meth)acrylamide monomers are acrylamide (R₁ = R₂ = R₃ = H), methacrylamide (R₁ = CH₃, R₂ = R₃ = H), and N-substituted (meth)acrylamide monomers such as N,N-dimethylacrylamide (R₁ = H, R₂ = R₃ = CH₃), N,N-dimethylmethacrylamide (R₁ = R₂ = R₃ = CH₃), N-methylolacrylamide (R₁ = H, R₂ = H, R₃ = CH₂OH).

By N-substituted maleimide monomers it is meant a compound according to the general formula: 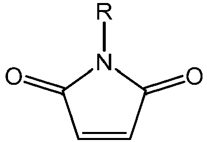 wherein R can be selected from an alkyl containing from 1 to 17 carbon atoms, or halogen atom.

Preferred N-substituted maleimide monomers are those where R is selected from the group consisting of H, CH₃, phenyl, cyclohexyl and halogen. It is preferable that R is selected from the group consisting of phenyl and cyclohexyl.

By itaconate dialkylester monomers it is meant a compound according to the general formula: 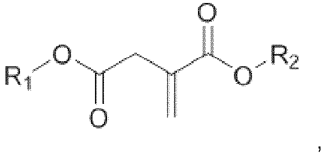 wherein each of R₁ and R₂, separately from one another, is an alkyl group preferably with 1-4 carbon atoms. Suitable alkyl groups include methyl, ethyl, n-propyl, isopropyl and butyl groups. Particularly, the itaconate dialkylester is preferably selected from the group consisting of dimethyl itaconate (DMI), diethyl itaconate (DEI), di(n-propyl) itaconate, diisopropyl itaconate, dibutyl itaconate (DBI).

By lactone monomers it is meant a compound according to the general formula: 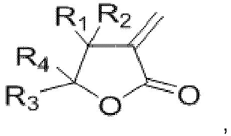 wherein each of R₁, R₂, R₃, R₄, separately from one another, is selected from the group consisting of H and an alkyl group preferably with 1-4 carbon atoms. Particularly preferred alkyl groups are methyl and ethyl. More preferably, each of R₁, R₂, R₃, R₄, separately from one another, is selected from the group consisting of H and CH₃.

In preferred embodiments, R₁, R₂, R₃, and R₄ are selected as follows:
R₁ = H, R₂ = H, R₃ = CH₃, R₄ = H (α-methylene-γ-valerolactone (MVL), same as γ-methyl-α-methylene-γ-butyrolactone),
R₁ = H, R₂ = H, R₃ = H, R₄ = H (α-methylene-γ-butyrolactone (MBL)),
R₁ = CH₃, R₂ = H, R₃ = H, R₄ = H (β-methyl-α-methylene-γ-butyrolactone (MMBL)), or
R₁ = H, R₂ = H, R₃ = CH₃, R₄ = CH₃ (γ,γ-dimethyl-α-methylene-γ-butyrolactone).

More preferably, the lactone monomer is either MVL or MBL.

In embodiments, at least one of the one or more ethylenically unsaturated comonomers is selected from (meth)acrylate monomers and nitrile-containing monomers. In further embodiments, at least one comonomer is selected from acrylic acid, methacrylic acid, acrylonitrile, methacrylonitrile and C₁₋₁₂ alkylacrylates and methacrylates, for example those where the C₁₋₁₂ alkyl group is methyl.

In the thermoplastic shell polymer, the at least one ethylenically unsaturated comonomer is different from the at least one cyclic ketene acetal.

The copolymer preferably contains at least 1 wt.% of the cyclic ketene acetal, more preferably at least 2 wt.%, such as at least 3 wt.%, yet more preferably at least 5 wt.% of the cyclic ketene acetal based on the total weight of the polymer. Higher amounts of the cyclic ketene acetal are also possible, such as up to 50 wt.%, or up to 45 wt.%, or up to 40 wt.%, or up to 35 wt.%, or up to 30 wt.%, such as or up to 25 wt.%, or up to 20 wt.%. For instance, the at least one cyclic ketene acetal may be present in the copolymer in an amount of 1 to 50 wt.%, or preferably in an amount of 3 to 30 wt% or less, or most preferably in an amount of 5 to 20 wt.%, in each case based on the total weight of the copolymer.

The comonomers are preferably present in the copolymer in an amount of least 50 wt.%, such as at least 55 wt.%, at least 60 wt.%, at least 65 wt.%, at least 70 wt.%, or at least 75 wt.%, preferably at least 80 wt.%, in each case based on the total weight of the copolymer. The comonomers may be present in the copolymer in an amount of up to 99 wt.%, such as up to 98 wt.%, or up to 97 wt.%, and particularly preferably are present in an amount of up to 95 wt.%, in each case based on the total weight of the copolymer. For instance, the comonomers may be present in an amount of 50 to 99 wt.%; or preferably in an amount of 70 to 97 wt.%, or most preferably in an amount of 80 to 95 wt.%, in each case based on the total weight of the copolymer.

When a comonomer content in the polymer is discussed within the present specification, it is understood as the content of the comonomer as a building block in the copolymer relative to the total polymer weight, and not as a free monomer content of unreacted monomers that may be present in the polymer reaction product.

In some embodiments, it may be preferred that the ethylenically unsaturated monomers are substantially free from vinyl aromatic monomers. If included, the amount thereof is preferably less than 10 wt.%, more preferably less than 5 wt.%, most preferably less than 1 wt.% of the total polymer weight. Most preferably, the thermoplastic shell copolymer is free from vinyl aromatic comonomers. An example of a vinyl aromatic monomer is styrene. In some embodiments, the ethylenically unsaturated monomers comprise small amounts of one or more crosslinking multifunctional monomers, such as one or more of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, dipentaerythritol hexa(meth)acrylate, triallylformal tri(meth)acrylate, allyl methacrylate, trimethylolpropane tri(meth)acrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal, triallyl isocyanate, triallyl isocyanurate, 1,4-butanediol divinyl ether and trivinylcyclohexane or any combination thereof. Particularly preferred are crosslinking monomers that are at least tri-functional. The amounts of crosslinking functional monomers may, for example, be from 0.1 to 5 wt.% of the total polymer weight, more preferably 0.1 - 3 wt.% and even more preferably 0.1 - 1 wt. %.

The softening temperature of the polymer shell, normally corresponding to its glass transition temperature (T_{g}), is preferably within the range from 0 to 350°C, most preferably from 50 to 300°C.

The core forming agent can be any single compound or compound mixture which can form a core of a core-shell microspheres. For instance, the core forming agent can be a gas or liquid. In some embodiments, the core forming agent can be a hydrocarbon or a blowing agent (for instance in case the core-shell microspheres are thermally expandable core-shell microspheres).

In case the core-shell microspheres are thermally expandable core-shell microspheres, the thermally expandable core-shell microspheres preferably contain a blowing agent (also called propellant). The core-shell microspheres are preferably thermally expandable core-shell microspheres.

If present, the blowing agent (propellant) is selected such that it has a sufficiently high vapour pressure at temperatures above the softening temperature of the thermoplastic shell to be able to expand the microparticles. In most cases the boiling temperature of the blowing agent is not higher than the softening temperature of the thermoplastic shell. The boiling point of the blowing agent at atmospheric pressure is preferably in the range from -50 to 250°C, more preferably from -20 to 200°C, most preferably from -20 to 100°C. The amount of the blowing agent in the expandable microspheres is preferably from 5 to 60 wt.%, more preferably from 10 to 50 wt.%, most preferably from 15 to 40 wt.%, particularly most preferably from 15 to 35 wt.% based on the total weight of the microparticles.

The blowing agent can be a single compound or a mixture of compounds. Preferably, the blowing agent is a hydrocarbon or a mixture of hydrocarbons. More preferably, it is a hydrocarbon with 1 to 18 carbon atoms, even more preferably 3 to 12 carbon atoms, most preferably 4 to 10 carbon atoms, or mixtures thereof. The hydrocarbons can be saturated or unsaturated hydrocarbons. The hydrocarbons can be aliphatic, cyclic or aromatic hydrocarbons. Examples of suitable hydrocarbons include n-butane, isobutane, n-pentane, isopentane, cyclopentane, neopentane, hexane, isohexane, neo-hexane, cyclohexane, heptane, isoheptane, octane, isooctane, decane, dodecane, isododecane and any combination thereof. Aside from them, other hydrocarbon types can also be used, such as petroleum ether. It is preferable that the blowing agent contains n-butane, isobutane, n-pentane, isopentane, isohexane, isooctane, isododecane or mixtures thereof. More preferably, the blowing agent is selected from n-butane, isobutane, n- pentane, and isopentane. Most preferably, the blowing agent is isobutane.

In a preferred embodiment, the core-shell microspheres are thermally expandable core-shell microspheres. In order to achieve a sufficient expandability, such thermally expandable core-shell microspheres contain a suitable blowing agent.

In case the core-shell microspheres are thermally expandable core-shell microspheres, the temperature at which the expansion starts is called Tₛₜₐᵣₜ, while the temperature at which maximum expansion is reached is called Tₘₐₓ. In some applications it is desirable that the microspheres have a high Tₛₜₐᵣₜ and high expansion capability, so as to be used in high temperature applications like foaming of thermoplastic materials in e.g. extrusion or injection molding processes. Tₛₜₐᵣₜ for the expandable microspheres is preferably from 80 to 300°C, more preferably from 80 to 250°C. In some embodiments, Tₛₜₐᵣₜ can be in the range from 190 to 240°C. In other embodiments, lower Tₛₜₐᵣₜ temperatures are preferred, such as from 100 to 190°C. Tₘₐₓ for the expandable microspheres is preferably from 130 to 350°C, most preferably from 150 to 270°C.

The core-shell microspheres preferably have a volume median diameter from 1 to 500 µm, more preferably from 3 to 200 µm, most preferably from 3 to 100 µm.

The term expandable microspheres as used herein refers to expandable microspheres that have not previously been expanded, i.e. unexpanded expandable microspheres.

In the core-shell microspheres, in particular the expandable polymeric microspheres, the thermoplastic polymer shell surrounds a hollow core or cavity, which contains the core-forming agent, in particular the blowing agent. The microsphere ideally comprises just a single core, as opposed to so-called multi-core microspheres. These are illustrated in Figures 1A and 1B, where 1 indicates the thermoplastic polymer, and 2 indicates hollow regions that contain blowing agent. In Figure 1B, there is no polymeric shell as such, the structure more being representative of a polymeric bead comprising pockets of blowing agent in a foam- or cellular-type structure. Therefore, the term "core-shell" distinguishes the single core microspheres from the foam/cellular structure that is associated with multiple core microspheres.

In a further, second aspect, the present invention relates to a process for the manufacture of core-shell microspheres as described above. The process comprises aqueous suspension polymerization of ethylenically unsaturated monomers as described above using a free-radical initiator in the presence of a core-forming agent, preferably a blowing agent, wherein the ethylenically unsaturated monomer is a cyclic ketene acetal. Regarding the kinds and amounts of the monomers and core-forming agent, preferably the blowing agent, the above description of the core-shell microspheres is referred to. The production may follow the same principles as described for instance in the context of expandable core-shell microspheres in US 3,615,972, US 3,945,956, US 4,287,308, US 5,536,756, EP 0 486 080, US 6,509,384, WO 2004/072160, WO 2007/091960.

In a typical process of suspension polymerization, the monomer(s) and the core-forming agent, preferably the blowing agent, are mixed together to form a so called oil-phase. The oil-phase is then mixed with an aqueous mixture, for example by stirring, agitation, to form an emulsion. The emulsion formation allows for a manipulation of the size of the resultant emulsion droplets. It is preferable that the emulsion droplets have a median diameter of up to 500 µm and preferably in a range of 3 - 100 µm. The emulsion formation may be performed by devices known in the art to provide emulsion droplets having a median diameter within the aforementioned range.

The emulsion may be stabilised with so called stabilising chemicals, or suspending agents, as known in the art such as surfactants, polymers or particles.

The preferred stabilisation system is particle stabilisation by a so-called "Pickering Emulsion" processes. The stabilisation of the emulsion droplets is preferred for a number of reasons; without stabilisation a coalescence of the emulsion droplets containing the monomers and the core-forming agents may occur. Coalescence has negative effects; such as, a non-uniform emulsion droplet size distribution resulting in undesirable proportions of emulsion droplets with different sizes, which in turn leads to undesirable properties of core-shell microspheres after polymerization. Furthermore, stabilisation prevents aggregation of core-shell microspheres. In addition, stabilisation may prevent formation of non-uniform core-shell microspheres and/or the formation of a non-uniform thermoplastic shell and an incomplete thermoplastic shell of the core-shell microspheres. The suspending agent is preferably present in an amount from 1 to 20 wt.% based on the total weight of the monomer(s).

In some embodiments, the suspending agent is selected from the group consisting of salts, oxides and hydroxides of metals like Ca, Mg, Ba, Zn, Ni and Mn, for example one or more of calcium phosphate, calcium carbonate, magnesium hydroxide, magnesium oxide, barium sulphate, calcium oxalate, and hydroxides of zinc, nickel or manganese. These suspending agents are suitably used at a high pH, preferably from 5 to 12, most preferably from 6 to 10. Preferably magnesium hydroxide is used. Alkaline conditions however may facilitate the hydrolysis of the (co)polymer and may in some cases be less preferred.

In other embodiments, it may be advantageous to work at a low pH, preferably from 1 to 6, most preferably from 3 to 5. A suitable suspending agent for this pH range is selected from the group consisting of starch, methyl cellulose, hydroxypropyl methylcellulose, hydroxypropyl methylcellulose, carboxy methylcellulose, gum agar, silica, colloidal clays, oxide and hydroxide of aluminium or iron. Preferably inorganic particles are used, and particularly preferably silica (SiO₂) is used.

In order to enhance the effect of the suspending agent, it is also possible to add small amounts of one or more co-stabilisers, for example from 0.001 to 1 wt.% based on the total weight of the monomer(s). Co-stabilisers can be organic materials which can be selected, for example, from one or more of water-soluble sulfonated polystyrenes, alginates, carboxymethylcellulose, tetramethyl ammonium hydroxide or chloride or water-soluble complex resinous amine condensation products such as the water-soluble condensation products of diethanolamine and adipic acid, the water-soluble condensation products of ethylene oxide, urea and formaldehyde, polyethylenimine, polyvinylalcohol, polyvinylpyrrolidone, polyvinylamine, amphoteric materials such as proteinaceous materials like gelatin, glue, casein, albumin, glutin and the like, non-ionic materials like methoxycellulose, ionic materials normally classed as emulsifiers, such as soaps, alkyl sulphates and sulfonates and long chain quaternary ammonium compounds.

In some embodiments, the suspending agent may be inorganic particles, in particular silica particles, with co-stabilisers. The silica particles with co-stabilisers provide a stabilising protective layer on a surface of the thermoplastic shell of the core-shell microspheres and, in case the core shell particles are thermally expandable core-shell particles, the resultant expanded microspheres. A combination of silica particles and co-stabilisers is disclosed in US 3,615,972. The co-stabilisers in this case can be selected from: metal ions (such as Cr(III), Mg(II), Ca(II), AI(III) or Fe(III)); a flocculant (such as a poly-condensate oligomer of adipic acid and diethanol amine) with sometimes a reducing agent. The metal ions interact with the silica particles and the flocculants preventing coalescence of the emulsion droplet and therefore stabilise the emulsion droplets. In other embodiments, the silica particles may be modified with organosilane groups as described in PCT/EP2017/067349.

In a suitable, preferably batch-wise, procedure for preparing core-shell microspheres of the invention the polymerization is conducted in a reaction vessel as described below. For 100 parts of the monomer phase (suitably including the monomer(s) and the core-forming agent, preferably a blowing agent, the proportions of which determine proportions of monomer(s) in the polymer shell and the amount of core-forming agent in the final product), one or more polymerization initiator, preferably in an amount from 0.1 to 5 parts, aqueous phase, preferably in an amount from 100 to 800 parts, and one or more suspending agent, preferably in an amount from 1 to 20 parts, are mixed and homogenised. The size of the droplets of the monomer phase obtained determines the size of the final core-shell microspheres in accordance with the principles described in e.g. US 3,615,972, which can be applied for all similar production methods with various suspending agents. The suitable pH depends on the suspending agent used, as described above.

The emulsion obtained is subjected to conventional radical polymerization using at least one initiator. Typically, the initiator is used in an amount from 0.1 to 5 wt.% based on the weight of the monomer phase. Conventional radical polymerization initiators are selected from one or more of organic peroxides such as dialkyl peroxides, diacyl peroxides, peroxy esters, peroxy dicarbonates, or azo compounds. Suitable initiators include dicetyl peroxydicarbonate, di(4-tert-butylcyclohexyl) peroxydicarbonate, di(2-ethylhexyl) peroxydicarbonate, dioctanyl peroxide, dibenzoyl peroxide, dilauroyl peroxide, didecanoyl peroxide, tert-butyl peracetate, tert-butyl perlaurate, tert-butyl perbenzoate, tert-butyl hydroperoxide, cumene hydroperoxide, cumene ethylperoxide, diisopropyl peroxydicarbonate, 2,2'-azobis(isobutyronitrile) (AIBN), 2,2'-azobis(2,4-dimethyl valeronitrile), 2,2'-azobis(2-methylpropionate), 2,2'-azobis[2-methyl-N-(2-hydroxyethyl)propionamide] and the like. It is also possible to initiate the polymerization with radiation, such as high energy ionising radiation, UV radiation in combination with a photoinitiator or microwave-assisted initiation.

When the polymerization is essentially complete, core-shell microspheres are normally obtained as an aqueous slurry or dispersion, which can be used as such or dewatered by any conventional means, such as bed filtering, filter pressing, leaf filtering, rotary filtering, belt filtering or centrifuging to obtain a so called wet cake. It is also possible to dry the core-shell microspheres by any conventional means, such as spray drying, shelf drying, tunnel drying, rotary drying, drum drying, pneumatic drying, turbo shelf drying, disc drying or fluidised bed drying.

If appropriate, the core-shell microspheres may at any stage be treated to reduce the amount of residual unreacted monomers, for example by any of the procedures described in the earlier mentioned WO 2004/072160 or US 4,287,308.

A further, third aspect of the present invention concerns a process for preparing expanded microspheres comprising heating the thermally expandable core-shell microspheres as described above. The expansion is effected by heating the expandable microspheres at a temperature above Tₛₜₐᵣₜ, preferably at a temperature of at least 100°C. The upper temperature limit is set by when the microspheres start collapsing and depends on the exact composition of the polymer shell and the blowing agent. The ranges for the Tₛₜₐᵣₜ and Tₘₐₓ can be used for finding a suitable expansion temperature. In most cases a temperature in the range 100 to 300°C, or more preferably in the range 150 to 250°C, is suitable. The density of the expanded microspheres can be controlled by selecting temperature and time for the heating. The expansion can be effected by any suitable means for heating in any suitable device, as described in e.g. EP 0 348 372, WO 2004/056549 or WO 2006/009643.

A further, fourth aspect of the present invention concerns expanded microspheres obtained by expanding expandable core-shell microspheres as described above using for instance a method as described above on the third aspect of the present invention. The expansion typically results in a particle diameter from 2 to 5 times larger than the diameter of the unexpanded microspheres. The density of the expanded microspheres may, for example, be from 0.005 to 0.2 g/cm³, preferably from 0.005 to 0.1 g/cm³, and even more preferably from 0.005 to 0.06 g/cm³.

The core-shell microspheres and in particular the expandable and expanded microspheres of the present invention are useful in various applications such as printing inks (such as waterbome inks, solvent borne inks, plastisols, thermal printer paper, UV-curing inks etc. e.g. for textile, wall paper etc.), putties, sealants, toy-clays, underbody coatings, adhesives, debonding of adhesives, artificial leather, genuine leather, paint, non-woven materials, paper and board, coatings (e.g anti- slip coating etc.) for various materials such as paper, board, plastics, metals and textile, explosives, cable insulations, thermoplastics (such as polyethylene, polyvinyl chloride, poly(ethylene-vinylacetate), polypropylene, polyamides, poly(methyl methacrylate), polycarbonate, acrylonitrile-butadiene-styrene polymer, polylactic acid, polyoxymethylene, polyether ether ketone, polyetherimide, polyether sulfone, polystyrene and polytetrafluoroethylene) or thermoplastic elastomers (such as styrene-ethylene-butylene-styrene copolymer, styrene-butadiene-styrene copolymer, thermoplastic polyurethanes and thermoplastic polyolefins), styrene-butadiene rubber, natural rubber, vulcanized rubber, silicone rubbers, thermosetting polymers (such as epoxies, polyurethanes and polyesters). In some of these applications expanded microspheres are particularly advantageous, such as in putties, sealants, toy-clays, genuine leather, paint, explosives, cable insulations, porous ceramics, and thermosetting polymers (like epoxies, polyurethanes and polyesters). In some cases, it is also possible to use a mixture of expanded and expandable microspheres of the invention, for example in underbody coatings, silicone rubbers and light weight foams.

The invention will be further described in connection with the following examples which, however, are not to be interpreted to limit the scope of the invention. If not otherwise stated, all parts and percentages refer to parts and percent by weight.

### Examples

The particle size and size distribution was determined by laser light scattering on a Malvern Mastersizer Hydro 2000 SM apparatus on wet samples. The median particle size is presented as the volume median diameter d(0.5).

The amount of the blowing agent was determined by thermal gravimetric analysis (TGA) on a Mettler Toledo TGA/DSC 2 with STAR^{e} software. All samples were dried prior to analysis in order to exclude as much moisture as possible and if present also residual monomers. The analyses were performed under an atmosphere of nitrogen using a heating rate at 20°C min⁻¹ starting at 30°C.

Size exclusion chromatography (SEC) was performed using a SECcurity 1260 Polymer Standard Services system with a GRAM pre-column, two GRAM 1000 analytical columns (Polymer Standard Services, Mainz, Germany) and a SECcurity 1260 RI detector. The mobile phase was dimethyl sulfoxide (DMSO) with LiBr (0.5% w/w) at 60 °C. Pullulan standards ranging from 342 to 708,000 g mol⁻¹ were used for calibration.

### Example 1 (Biodegradability test)

The biodegradation potential of two poly-2-methylene-1,3-dioxepane (PMDO) polymers with different molecular weights (PMDO (1) and PMDO (2)) as well as of a polycaprolactone polymer (PCL) as reference was assessed in ready biodegradation screening test performed according to the OECD 301D test guideline. The polymer properties as measured by Size exclusion chromatography (SEC) are listed in Table 1.

**Table 1:**

| **Polymer** | ***M*ₙ (kg mol⁻¹)** |
|---|---|
| Polycaprolactone (PCL; reference) | 22 |
| PMDO (1) | 26 |
| PMDO (2) | 41 |

The polymers were exposed to aerated undiluted river water supplemented with the mineral salts of the OECD nutrient medium or to homogenized activated sludge diluted (2 mg dry weight L⁻¹) in aerated OECD nutrient medium. Ammonium chloride was omitted from the nutrient medium to prevent additional oxygen consumption due to nitrification that is not related to the biodegradation of the test substance.

The tests were performed in 0.3 L biological oxygen demand (BOD) bottles with glass stoppers. The polymer is poorly water soluble and was therefore dosed with the help of dichloromethane (DCM) which was removed before the start of the test. The biodegradation was followed by oxygen measurements in the bottle using an oxygen electrode, oxygen meter and a funnel that enabled repeated oxygen measurements in the bottles without loss of the medium. Biodegradation was calculated as the ratio of biological oxygen demand to theoretical oxygen demand ratio (mean and standard deviation (SD)).

Ready biodegradability tests are regarded as stringent and substances passing these tests give unequivocal proof for a rapid and ultimate biodegradation (mineralization) in most environments including wastewater treatment plants. Readily biodegradability is a classification that chemicals need to pass for ultimate biodegradability and the sample is considered readily biodegradable when it reaches 60% biodegradation or more. The biodegradability of PMDO and PCL was assessed using the (prolonged) OECD 301D ready biodegradation screening test.

The results of the biodegradation studies are summarized below in Table 2.

**Table 2:**

| **Inoculum** | **Polymer** | **Biodegradation per centage (Mean ± SD)*** | |
|---|---|---|---|
| | | Day 28 | Day 56 |
| **River water** | Polycaprolactone (PCL; reference) | 28 ± 14 | 61 ± 9 |
| | PMDO (1) | 62 ± 16 | 66 ± 5 |
| | PMDO (2) | 58 ± 18 | 66 ± 3 |

| | | | |
|---|---|---|---|
| *Mean and standard deviation (SD) are calculated based on the biodegradation achieved in three replicate bottles | | | |

The PMDO (1) polyester achieved a ready biodegradation result in the Closed Bottle Test (CBT) with river water inoculum in one of the biological replicates, resulting in 62% biodegradation at day 28. In the same test using the river water inoculum, PMDO (2) achieved 58% biodegradation at day 28. The standard deviations of the replicates for both PMDO samples show that the approximate time to reach 60 % degradation is around 28 days and the degradation rates for both PMDO samples are therefore regarded comparable.

PCL was biodegraded by 28 % at day 28 in the CBT inoculated with river water.

In other words, it can be seen from Table 2 that PMDO polymers are readily biodegradable.

### Example 2 (Core-shell microspheres)

A reaction mixture containing silica-stabilised organic droplets in water was created by mixing the phases and stirring vigorously until a suitable droplet size had been achieved. The water dispersion contained 60 g L⁻¹ of SiO₂ (Levasil CC503, commercially available from Nouryon International B. V.) in water and had a pH of 4.5. The organic droplets contained 2.0 wt.% of dilauroyl peroxide, 20 wt.% of isopentane and, if present, 0.69 wt.% of 1,4-Butanediol dimethacrylate (BDDMA). Acrylonitrile (AN), Vinylacetate (Vac), and 2-methylene-1,3-dioxepane (MDO) or 5,6-benzyl-2-methylene-1,3-dioxepane (BMDO) were added in the amounts as indicated in Table 3 in wt.%. Polymerization was performed at 62°C in a sealed reactor under agitation over 20 hours. After cooling to room temperature, a sample of the obtained microsphere slurry was removed for determination of the particle size distribution. After filtration, washing and drying the particles were analyzed. The dry particles contained isopentane in the amounts as indicated in Table 3 and had a median particle size as indicated in Table 3.

**Table 3**

| Ex | Copolymer | Crosslinker | Composition (wt. %) | Amount of IP in core-shell microspheres (wt.%) | Size (µm) |
|---|---|---|---|---|---|
| 1 | ANA/Ac | - | 60/40 | 18 | 11 |
| 2 | AN/MDO/VAc | - | 60/10/30 | 18 | 7 |
| 3 | AN/MDO/VAc | - | 60/20/20 | 17 | 6 |
| 4 | AN/MDO/VAc | - | 50/10/40 | 19 | 6 |
| 5 | AN/BMDO/VAc | - | 60/10/30 | 19 | 7 |
| 6 | AN/BMDO/VAc | - | 50/10/40 | 19 | 7 |
| 7 | AN/VAc | BDDMA | 60/40 | 17 | 11 |
| 8 | AN/MDO/VAc | BDDMA | 60/10/30 | 18 | 7 |
| 9 | AN/MDO/VAc | BDDMA | 60/20/20 | 14 | 7 |
| 10 | AN/MDO/VAc | BDDMA | 50/10/40 | 19 | 7 |
| 11 | AN/BMDO/VAc | BDDMA | 60/10/30 | 15 | 7 |
| 12 | AN/BMDONAc | BDDMA | 50/10/40 | 13 | 7 |

| | | | | | |
|---|---|---|---|---|---|
| MDO = 2-methylene-1,3-dioxepane; BMDO = 5,6-benzyl-2-methylene-1,3-dioxepane; AN = acrylonitrile; Vac = vinyl acetate; BDDMA = 1,4-butanediol dimethacrylate; IP = isopentane | | | | | |

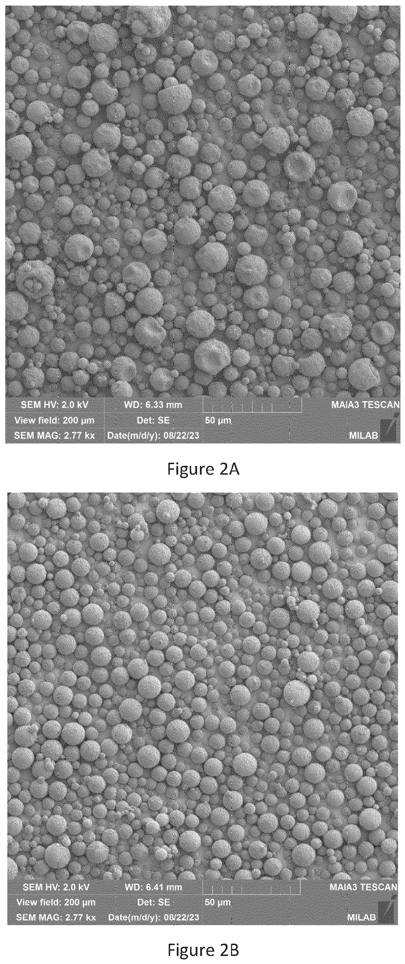

From Table 3 it can be seen that copolymers of AN, Vac, and MDO or BMDO with different amounts can be used to prepare core-shell microspheres having a desirable size of 7 to 11 µm and a nice spherical shape as well as a smooth surface (as confirmed by microscopy; see Figure 2b for the core-shell microspheres of Example 10). The surface of the microspheres of Example 10 was significantly smoother than the surface of the microspheres of Example 7 (see Figure 2a) which do not contain cyclic ketene monomers. In addition, the spherical shape of the microspheres of Example 10 was much nicer than the spherical shape of the microspheres of Example 7. Moreover, it has been found that the core-shell particles of Examples 1-12 at the same time are thermally expandable with similar suitable expansion properties (volume increase during expansion of at least more than 2 times) and expansion temperatures within a commercially attractive range of 100 to 120°C.

### Example: 3 (Chemical hydrolysis)

In a further experiment, it was confirmed that the core-shell microspheres of the present invention are readily hydrolysable. The potential hydrolysis of a polymer is a further indicator of its suitable biodegradability.

100 mg of polymer (obtained from AN/MDO/VAc in a ratio of 50/10/40) was dissolved in THF (8 mL), followed by the addition of 1.25 mL of 0.5wt% KOH in MeOH. The reaction was left to stir at room temperature for 5 h. pH of the aqueous phases was adjusted to < 7 using HCl (10%) followed by extraction with chloroform (3x5 mL). The organic phase was washed with brine (1 × 5 mL), dried with anhydrous MgSO₄ (s) and the solvent was evaporated under reduced pressure. The hydrolysis products were characterized by SEC.

The molecular weight (number average (Mₙ) and weight average (M_{w})) of the polymer was determined before and after hydrolysis. The results are shown in the following Table 4:

**Table 4:**

| | M_{N} [g/mol] | M_{W}[g/mol] |
|---|---|---|
| Polymer before hydrolysis | 1.11 * 10⁵ | 2.48 * 10⁵ |
| Polymer after hydrolysis | 4.69 * 10⁴ | 7.91 * 10⁴ |

It was shown that the polymer obtained from AN/MDO/VAc in a ratio of 50/10/40 has satisfactory hydrolyzation behavior indicating suitable degradation behavior.

## Claims

1. Core-shell microspheres comprising a thermoplastic polymer shell encapsulating a hollow core comprising a core-forming agent which can be a gas or liquid, wherein the thermoplastic polymer shell comprises a copolymer made of at least one cyclic ketene acetal and at least one ethylenically unsaturated comonomer different to the at least one cyclic ketene acetal.

2. Core-shell microspheres according to claim 1, wherein the cyclic ketene acetal has the formula (1): 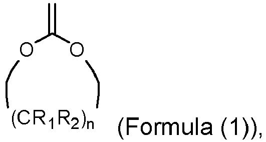
wherein each R₁ and R₂ is independently hydrogen or a group selected from alkyl or aryl which may be further substituted, and
n is an integer from 2 to 10.

3. Core-shell microspheres according to claim 2, wherein n is an integer from 2 to 4.

4. Core-shell microspheres according to claim 2 or 3, wherein each R₁ is hydrogen and each R₂ is independently hydrogen or a group selected from alkyl or aryl which may be further substituted.

5. Core-shell microspheres according to any one of claims 2-4, wherein all R₁ and R₂ are hydrogen.

6. Core-shell microspheres according to any one of claims 1 to 4, wherein the cyclic ketene acetal is selected from 2-methylene-1,3-dioxepane (MDO), 2-methylene-4-methyl-1,3-dioxepane (Me-MDO), and 5,6-benzyl-2-methylene-1,3-dioxepane (BMDO).

7. Core-shell microspheres according to any one of claims 1 to 6, wherein the copolymer comprises one or more monoethylenically unsaturated comonomers selected from (meth)acrylic acid, (meth)acrylates, vinyl esters, styrenes, nitrile-containing monomers, vinylidene halides, vinyl ethers, N-substituted maleimides, dienes, vinyl pyridine and combinations thereof.

8. Core-shell microspheres according to claim 7, wherein at least one monoethylenically unsaturated comonomer is selected from acrylonitrile, methacrylonitrile, methyl methacrylate, vinylidene chloride, methyl acrylate, vinyl acetate, (meth)acrylic acid and (meth)acrylamide, preferably is selected from acrylonitrile and vinyl acetate.

9. Core-shell microspheres according to any one of claims 1 to 8, wherein the hollow core comprises a hydrocarbon, preferably selected from the group consisting of n-butane, isobutane, n-pentane, isopentane, cyclopentane, neopentane, hexane, isohexane, neo-hexane, cyclohexane, heptane, isoheptane, octane, isooctane, decane, dodecane, isododecane and any combination thereof.

10. Core-shell microspheres according to any one of claims 1 to 9, wherein the at least one cyclic ketene acetal is present in the copolymer in an amount of 1 to 50 wt.%, preferably in an amount of 3 to 30 wt%, or most preferably 5 to 20 wt.%, in each case based on the total weight of the copolymer.

11. Core-shell microspheres according to any one of claim 1 to 10, which are thermally expandable.

12. Process for the manufacture of the microspheres according to any one of claims 1 to 11, comprising aqueous suspension polymerization of ethylenically unsaturated monomer(s) using a free-radical initiator in the presence of a core-forming agent, wherein at least one ethylenically unsaturated monomer is a cyclic ketene acetal.

13. The process according to claim 12, wherein the suspension is stabilized by inorganic particles, preferably SiO₂.

14. Process for preparing expanded microspheres comprising heating the thermally expandable core-shell microspheres according to claim 11 so that they expand.

15. Expanded microspheres obtained by thermal expansion of the microspheres according to claim 11.
